# FASCICULE DE BREVET EUROPEEN

(11) **EP 0 468 878 B1**
(45) Date de publication et mention de la délivrance du brevet: **29.03.1995**
(21) Numéro de dépôt: 91402041.7
(22) Date de dépôt: 23.07.1991
(51) Int. Cl.: G02B 6/44

(54) **Câble de télécommunication à fibres optiques**
Faseroptisches Telekommunikationskabel
Fibre optic telecommunication cable

(30) Priorité: 27.07.1990 FR 9009627
(43) Date de publication de la demande: 29.01.1992
(73) Titulaire: SOCIETE INDUSTRIELLE DE LIAISONS ELECTRIQUES - SILEC, F-75008 Paris (FR); L'ETAT FRANCAIS représenté par LE CENTRE NATIONAL D'ETUDES DES TELECOMMUNICATIONS, 92131 Issy-les-Moulineaux (FR)
(72) Inventeur: Le Noane, Georges, F-22730 Tregastel (FR); Cheron, Philippe, F-77710 St Ange le Vieil (FR); Jamet, Patrick, F-77130 Marolles sur Seine (FR); Trombert, Philippe, F-77133 Fericy (FR)
(74) Mandataire: Fruchard, Guy

(56) Documents cités:
- EP-A- 0 321 788
- DE-A- 2 525 067
- DE-A- 3 811 126
- FR-A- 2 321 133
- US-A- 4 230 395
- US-A- 4 312 566

## Description

La présente invention concerne un câble de télécommunication à fibres optiques, plus particulièrement bien que non exclusivement un câble de télécommunication à fibres monomodes pour utilisation dans des réseaux locaux.

On connaît des câbles de télécommunication comportant une série de fibres optiques disposées dans une gaine de protection. Afin de protéger les fibres optiques contre les micro-courbures qui entraînent généralement une perte des propriétés de transmission des fibres optiques, en particulier pour les fibres multimodes, on connaît, en particulier du document EP-A-321.788 des câbles à fibres optiques comportant un organe porteur, généralement un élément de renfort entouré par une série de tubes ou un jonc cylindrique rainuré. Les fibres optiques sont disposées de façon lâche dans les tubes ou dans les rainures du jonc cylindrique de sorte que l'on obtient une absence pratiquement totale de contrainte sur les fibres optiques même lorsque le câble est soumis à une traction importante ou à des variations de température. Le découplage entre la structure porteuse du câble et les fibres optiques assure également une résistance aux chocs et à l'écrasement.

Le document FR-A- 2 274 052 décrit également un câble comportant une structure porteuse par rapport à laquelle les fibres optiques sont découplées en utilisant un matériau à bas coefficient de frottement.

Un autre exemple est connu du document DE-A- 25 25067.

Cependant, les câbles de ce type sont onéreux et ont un encombrement important par rapport au nombre de fibres optiques qu'ils contiennent. Ces inconvénients sont incompatibles avec les conditions d'utilisation des fibres optiques, en particulier des fibres optiques monomodes, pour des réseaux locaux dans lesquels on souhaite avoir une très forte densité de liaison à faible coût d'acquisition et de pose des câbles à fibres optiques.

L'invention concerne un câble de télécommunication comportant une série de fibres optiques disposées dans une enveloppe et divisées en modules chacun enveloppé d'une gaine de maintien de faible épaisseur facilement déchirable dans lequel les gaines de maintien sont en contact avec les fibres optiques pour enserrer celles-ci sans découplage des fibres optiques et l'enveloppe est au contact des gaines de maintien des modules pour former un assemblage compact. On a en effet constaté qu'il était possible d'associer plusieurs fibres optiques à l'intérieur d'une même gaine de maintien disposée directement sans découplage sur l'ensemble des fibres sans dégrader les propriétés de transmission de ces dernières, cette gaine étant seulement destinée à assurer une cohésion du module avec une compacité élevée, tout en permettant un dénudage rapide sur le site lors du branchement à un organe d'utilisation ou d'un raccordement entre câbles. En outre, l'enveloppe disposée directement au contact de l'assemblage des modules complète la densification du câble et permet de conférer au câble des caractéristiques mécaniques suffisantes et adaptées à sa mise en oeuvre compte tenu de la faible dimension et du faible poids de celui-ci.

Selon une version avantageuse de l'invention, les fibres optiques sont revêtues d'une couche d'identification colorée. Ainsi on dispose d'un moyen de repérage individuel des fibres pour le branchement de celles-ci à un organe d'utilisation.

Selon un autre aspect avantageux de l'invention, les gaines de maintien des modules ont des couleurs différentes les unes des autres. Ainsi, on repère facilement un module devant être branché à un sous-ensemble particulier.

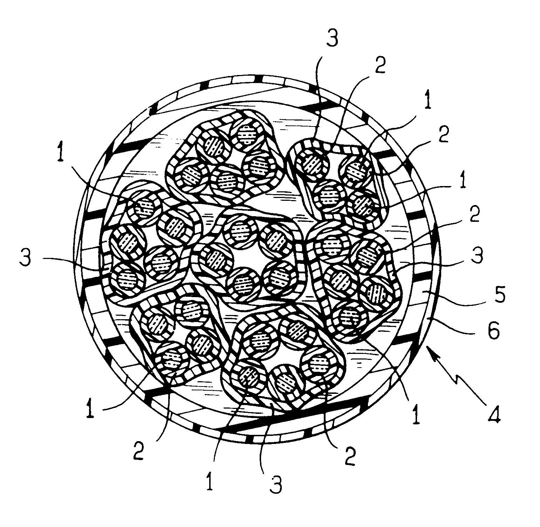

D'autres caractéristiques et avantages de l'invention apparaîtront encore à la lecture de la description qui suit d'un mode de réalisation particulier non limitatif de l'invention en référence à la figure unique ci-jointe qui représente une vue en coupe très agrandie d'un câble selon l'invention.

En référence à la figure, le câble de télécommunication selon l'invention, comporte une série de fibres optiques 1 chacune revêtue d'une couche d'identification colorée 2. La série de fibres optiques 1 est divisée en modules qui, dans l'exemple illustré, comprennent quatre ou cinq fibres optiques. Chaque module est enveloppé d'une gaine de maintien 3 de faible épaisseur facilement déchirable. Les gaines de maintien 3 sont en contact avec les fibres optiques constituant un module afin de les maintenir groupées.

Les gaines 3 sont adaptées aux caractéristiques des matériaux constitutifs des fibres optiques pour enserrer celles-ci de façon que les efforts de dilatation et de rétraction dûs aux variations de température soient très inférieurs aux contraintes conduisant à une dégradation des fibres optiques. Pour réaliser les gaines de maintien 3 on utilise, par exemple, du polyéthylène, du polypropylène, des polyamides ou d'autres matières qui sont de préférence extrudées sur un module de fibres simultanément au tirage et à l'assemblage des fibres. La gaine de maintien 3 est une couche colorée variant de quelques millièmes de millimètre à quelques dixièmes de millimètre, de préférence entre un centième de millimètre et un dixième de millimètre. Les fibres optiques sont ainsi protégées du contact avec le milieu ambiant et des agressions mécaniques de faible importance. La faible épaisseur de la gaine de maintien 3 évite de soumettre les fibres 1 à des contraintes d'élongation et de compression lors des cycles thermiques et permet une réalisation économique, en particulier si elle est réalisée durant la même opération de fabrication que le tirage des fibres optiques constituant le module, selon une technique du type multifibrage-cablage en ligne.

Le module ainsi obtenu présente une compacité importante, et facilite le raccordement des câbles par un repérage simple, une facilité de dénudage, une aptitude à la manipulation et une souplesse très favorables à l'organisation interne des boîtes de raccordement, qui peuvent de ce fait être optimisées en dimensions et en coût.

L'ensemble des modules 3 est recouvert par une enveloppe 4 en contact avec la gaine de maintien 3 des modules pour former un assemblage compact. L'enveloppe 4 est avantageusement constituée d'une couche de préférence extrudée 5 en matériau à faible coefficient de dilatation, à faible effet de relaxation et à forte résistance mécanique donnée par un module d'élasticité élevé, recouverte par une seconde couche 6 dont le rôle est d'assurer la présentation finale du câble, sa résistance à l'abrasion et abaisser son coefficient de frottement pour minimiser les efforts au moment de la pose dans un conduit tubulaire. L'espace compris entre les modules 3 et l'enveloppe 4 est, si on le souhaite, rempli avec un produit d'étanchéité de même que l'espace entre les fibres à l'intérieur d'une gaine de maintien.

On remarquera que le câble selon l'invention est particulièrement compact et comporte un grand nombre de fibres optiques pour un encombrement très réduit. De plus son coût de fabrication est très réduit en raison des possibilités qui existent actuellement d'extruder les modules et l'enveloppe à très grande vitesse. A ce propos, bien que l'extrusion soit le mode de réalisation préconisé pour la formation des modules, la gaine de maintien 3 peut également être réalisée par trempage et lissage dans une filière suivie d'une réticulation de la matière de protection par rayonnement ou irradiation, ou évaporation d'un solvant.

Bien entendu l'invention n'est pas limitée au mode de réalisation décrit et on peut y apporter des variantes de réalisation sans sortir du cadre de l'invention. En particulier, l'assemblage des fibres dans la gaine de maintien 3 et l'assemblage des modules dans l'enveloppe 4 peut être réalisé sans torsade, avec une torsade à pas continu, ou encore avec une torsade à pas alterné.

Bien que dans le mode de réalisation décrit les gaines de maintien aient été représentées avec une épaisseur constante, on peut prévoir que la matière des gaines de maintien s'étende entre les fibres pour un contact plus intime, voire même que les fibres optiques soient entièrement noyées dans la matière formant la gaine de maintien.

## Revendications

1. Câble de télécommunication consistant en une série de fibres optiques (1) disposées dans une enveloppe (4) et divisées en modules chacun enveloppé d'une gaine de maintien (3) de faible épaisseur facilement déchirable, caractérisé en ce que les gaines de maintien sont en contact avec les fibres optiques pour enserrer celles-ci sans découplage des fibres optiques, et en ce que l'enveloppe est au contact des gaines de maintien (3) des modules pour former un assemblage compact.

2. Câble de télécommunication selon la revendication 1 caractérisé en ce que les gaines de maintien (3) sont réalisées simultanément à un tirage et un assemblage des fibres optiques.

3. Câble de télécommunication selon la revendication 1 caractérisé en ce que les gaines de maintien (3) des modules ont des couleurs différentes les unes des autres.

4. Câble de télécommunication selon l'une des revendications 1 à 3, caractérisé en ce que les gaines de maintien (3) sont mises en place sur les modules par extrusion.

5. Câble de télécommunication selon l'une des revendications 1 à 4, caractérisé en ce que les fibres optiques (1) sont revêtues d'une couche d'identification colorée (2).

6. Câble de télécommunication selon l'une des revendications 1 à 5, caractérisé en ce qu'un produit d'étanchéité est disposé dans les gaines de maintien.

7. Câble de télécommunication selon l'une quelconque des revendications 1 à 6, caractérisé en ce qu'un produit d'étanchéité est disposé dans l'enveloppe à l'extérieur des gaines de maintien.

## Patentansprüche

1. Fernmeldekabel bestehend aus einer Reihe von Lichtleitfasern (1), die in einem Mantel (4) angeordnet und in Module aufgeteilt sind, deren jedes von einer dünnen, leicht zerreißbaren Trägerhülle (3) umgeben ist, dadurch gekennzeichnet, daß sich die Trägerhüllen mit den Lichtleitfasern in Kontakt befinden, um die Lichtleitfasern ohne Entkopplung derselben zu umschließen, und daß sich der Mantel (4) mit den Trägerhüllen (3) der Module in Kontakt befindet, um einen kompakten Verband zu bilden.

2. Fernmeldekabel nach Anspruch 1, dadurch gekennzeichnet, daß die Trägerhüllen (3) gleichzeitig mit dem Abziehen und Paketieren der Lichtleitfasern gebildet werden.

3. Fernmeldekabel nach Anspruch 1, dadurch gekennzeichnet, daß die Trägerhüllen (3) der Module unterschiedliche Farben haben.

4. Fernmeldekabel nach einem der Ansprüche 1 bis 3, dadurch gekennzeichnet, daß die Trägerhüllen (3) durch Extrudieren an den Modulen angebracht werden.

5. Fernmeldekabel nach einem der Ansprüche 1 bis 4, dadurch gekennzeichnet, daß die Lichtleitfasern (1) mit einer farbigen Identifizierungsschicht verkleidet sind.

6. Fernmeldekabel nach einem der Ansprüche 1 bis 5, dadurch gekennzeichnet, daß in den Trägerhüllen ein Dichtungsmaterial vorgesehen ist.

7. Fernmeldekabel nach einem der Ansprüche 1 bis 6, dadurch gekennzeichnet, daß in dem Mantel ein Dichtungsmaterial an der Außenseite der Trägerhüllen vorgesehen ist.

## Claims

1. A telecommunications cable consisting of a series of optical fibers (1) disposed in a covering (4) and split into modules, each module being enveloped in a thin supporting sheath (3) that is easily torn, the cable being characterized in that the supporting sheaths are in contact with the optical fibers to clamp them together, without decoupling of the optical fibers and in that the covering is in contact with the module-supporting sheaths (3) to constitute an assembly that is compact.

2. A telecommunications cable according to claim 1, characterized in that the supporting sheaths (3) are made simultaneously with operations of drawing the optical fibers, and of assembling them together.

3. A telecommunications cable according to claim 1, characterized in that the module-supporting sheaths (3) are of different colors.

4. A telecommunications cable according to any one of claims 1 to 3, characterized in that the supporting sheaths (3) are installed on the modules by extrusion.

5. A telecommunications cable according to any one of claims 1 to 4, characterized in that the optical fibers (1) are coated with respective colored identification layers (2).

6. A telecommunications cable according to any one of claims 1 to 5, characterized in that a sealant is disposed inside the supporting sheaths.

7. A telecommunications cable according to any one of claims 1 to 6, characterized in that a sealant is disposed inside the covering around the supporting sheaths.
